**Europäisches Patentamt**

**European Patent Office**

**Office européen des brevets**

(19)

(11) Veröffentlichungsnummer : **0 356 669 B1**

(12)

# EUROPÄISCHE PATENTSCHRIFT

(45) Veröffentlichungstag der Patentschrift :
**18.03.92 Patentblatt 92/12**

(51) Int. Cl.$^5$ : **B60T 13/16**

(21) Anmeldenummer : **89112722.7**

(22) Anmeldetag : **12.07.89**

(54) **Hydraulische Steuereinrichtung.**

(30) Priorität : **05.08.88 DE 3826620**

(43) Veröffentlichungstag der Anmeldung :
**07.03.90 Patentblatt 90/10**

(45) Bekanntmachung des Hinweises auf die
Patenterteilung :
**18.03.92 Patentblatt 92/12**

(84) Benannte Vertragsstaaten :
**DE FR GB IT**

(56) Entgegenhaltungen :
**EP-A- 0 136 622**
**FR-A- 2 113 963**

(73) Patentinhaber : **ROBERT BOSCH GmbH**
**Postfach 30 02 20**
**W-7000 Stuttgart 30 (DE)**

(72) Erfinder : **Sandau, Hartmut, Dipl.-Ing. (FH)**
**Hofpfad 11**
**W-7141 Schwieberdingen (DE)**

## Beschreibung

Stand der Technik

Die Erfindung geht aus von einer hydraulischen Steuereinrichtung nach der Gattung des Hauptanspruchs. Eine derartige Steuereinrichtung ist der EP-A-0 136 622 zu entnehmen Bei einer derartigen bekannten Einrichtung erfolgt der Druckaufbau in relativ wenigen Druckstufen, was unter Umständen einen ruckhaften Bremsbetrieb ergibt.

Vorteile der Erfindung

Die erfindungsgemäße Steuereinrichtung mit den kennzeichnenden Merkmalen des Hauptanspruchs hat demgegenüber den Vorteil, daß der Druckaufbau in mehreren Stufen erfolgt als bisher, was zu einem ruckfreien Bremsbetrieb führt.

Zeichnung

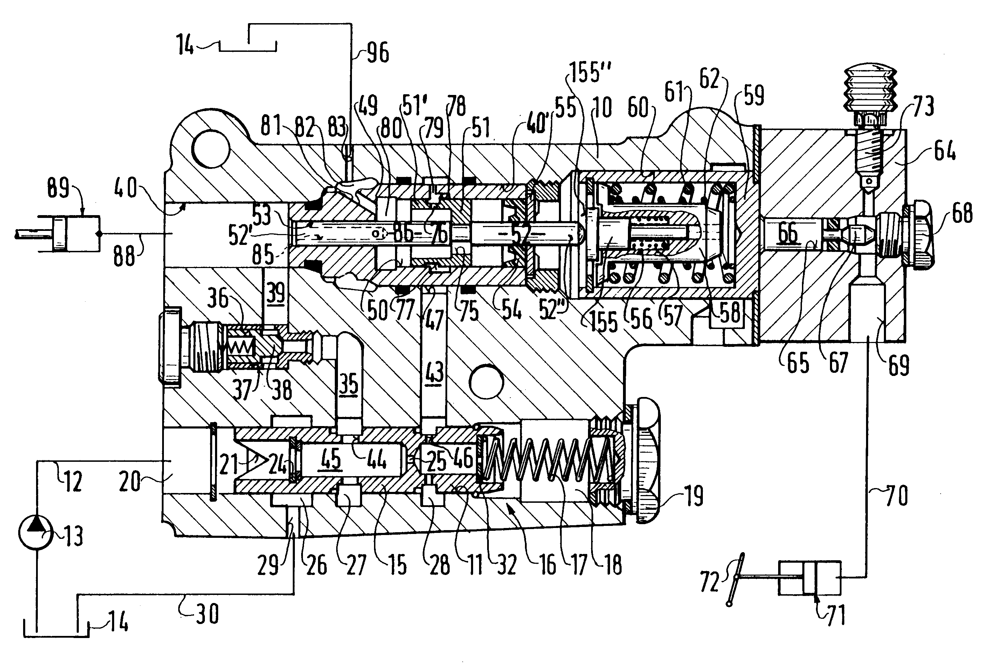

Ein Ausführungsbeispiel der Erfindung ist in der Zeichnung dargestellt und in der nachfolgenden Beschreibung näher erläutert. Die Zeichnung zeigt einen Längsschnitt durch eine hydraulische Steuereinrichtung mit Hydraulikanlage in schematischer Darstellung.

Beschreibung des Ausführungsbeispiels

Die Steuereinrichtung weist ein Ventilgehäuse 10 mit einer durchgehenden Längsbohrung 11 auf, an welche eine Förderleitung 12 angeschlossen ist, in die eine Pumpe 13 aus einem Behälter 14 Druckmittel fördert. In der Längsbohrung 11 ist ein Steuerschieber 15 eines Stromregelventils 16 gleitend geführt, auf den entgegen dem einströmenden Druckmittel eine Reglerfeder 17 einwirkt. Der hintere Teil der Bohrung 18, in welchem die Reglerfeder angeordnet ist, ist durch eine Verschlußschraube 19 dicht abgeschlossen. Dem Einlaß 20 der Längsbohrung 11 zugewandt, sind an der Stirnseite des Steuerschiebers 15 zwei Dreieckkerben 21 ausgebildet.

Im Inneren des Steuerschiebers 15 ist eine Blende 24 angeordnet, stromabwärts von dieser eine Drossel 25 mit wesentlich kleinerem Durchmesser als dem der Blende 24. An der Längsborung 11 sind drei Ringnuten 26, 27, 28 ausgebildet. Von der Ringnut 26 verläuft eine Bohrung 29 zum Äußeren des Ventilgehäuses; dort ist eine Rückleitung 30 angeschlossen, die zum Behälter 14 oder zu weiteren Verbrauchern führt. Im hintersten Teil des Steuerschiebers 15 ist eine Drosselscheibe 32 angeordnet, über welche die Reglerfeder 17 auf den Steuerschieber 15 einwirkt. Die Drosselscheibe 32 bewirkt lediglich eine Dämpfung der Bewegung des Steuerschiebers 15. In die Ringnut 27 mündet ein Kanal 35, in den eine Gehäusebohrung 36 eindringt, in welcher ein Ventileinsatz 37 mit kegeligem Rückschlagventil 38 eingesetzt ist. Von der Gehäusebohrung 36 geht ein Kanal 39 aus, der in eine parallel zur Längsbohrung 11 verlaufende Längsbohrung 40 mündet.

Von der Ringnut 28 geht ein Kanal 43 aus, welcher in eine Ringnut 47 an einem erweiterten Teil 40' der Längsbohrung 40 mündet. In den zwischen der Blende 24 und der Drosselbohrung 25 gelegenen Raum 45 im Steuerschieber münden mehrere Radialbohrungen 44, die in Höhe der Ringnut 27 liegen. Stromabwärts der Drosselbohrung 25 münden in den hohlen Steuerschieber mehrere Radialbohrungen 46, die in Höhe der Ringnut 28 liegen.

Im erweiterten Teil 40' der Längsbohrung 40 ist ein becherförmiger Gehäuseeinsatz 49 angeordnet, in dessen Gehäusebohrung 50 ein Schieber 51 gleitend gelagert ist. An diesem ist ein Kolben 52 befestigt, dessen linker Teil 52' dicht in einem achsgleich zur Gehäusebohrung 50 verlaufenden Bohrungsteil 53 gleitet, während sein rechter Teil 52" durch eine Dichtmanschette 54 nach außen geführt ist, die sich an einer Scheibe 55 abstützt. Die rechte Stirnseite 52" des Kolbens 52 stützt sich an der Stirnseite 155' eines Stufenkolbens 155 ab, der in einer passenden Stufenbohrung 56 eines kolbenförmigen Federwiderlagers 58 gleitend angeordnet und von einer Druckfeder 57 belastet ist, die ihn an die Stirnseite 52" des Kolbens 52 drückt. Das Federwiderlager 58 ist in einem Kolben 59 angeordnet, der in einer Bohrung 60 gleitend gelagert ist, die achsgleich zur Gehäusebohrung 40 verläuft. Auf das Federwiderlager wirken Federn 61, 62 ein. Die Bohrung 60 ist durch ein Gehäuse 64 verschlossen, in dem eine Längsbohrung 65 ausgebildet ist, die achsgleich zur Gehäusebohrung 40 verläuft. In der Längsbohrung 65 ist ein Kolben 66 dicht gleitend gelagert. Er hat einen Stößel 67, der sich gegen eine die Längsbohrung 65 verschließende Verschlußschraube 68 legt. In die Längsbohrung 65 mündet eine im Gehäuse 64 verlaufende Querbohrung 69, an welche eine Leitung 70 angeschlossen ist. Diese geht aus von einem Druckgeber 71, der durch ein Bremspedal 72 betätigbar ist. An die Längsbohrung 65 ist noch eine Entlüftungsvorrichtung 73 angeschlossen.

Die Ringwand 51' des Schiebers ist durch eine Querbohrung 76 durchbrochen, die Stirnwand durch eine Bohrung 75; erstere mündet in eine Ringnut 77, die mit einer Ringnut 78 im Gehäuseeinsatz 49 zusammenwirkt. Die beiden Ringnuten 77, 78 stehen über eine die Wand des Gehäuseeinsatzes 49 durchdringende Querbohrung 79 miteinander in Verbindung und damit mit dem Kanal 43. Vom Raum 80 innerhalb des Gehäuseeinsatzes 49 verläuft eine Schrägbohrung 81 in eine Ringnut 82 des Bohrungsteils 40' der Gehäusebohrung 40. Von der Ringnut 82 verläuft eine Bohrung 83 zum Äußeren des Gehäuses. Im linken Teil 52' des Kolbens 52 befindet sich eine Längsbohrung 85, von der eine Querbohrung 86 nach außen verläuft und in einer bestimmten Stellung des Schiebers 51 Verbindung zum Raum 80 hat. Von der Längsbohrung 40 führt eine Leitung 88 zu einem Bremszylinder 89. Von der Bohrung 83 verläuft eine Leitung 96 zum Behälter 14.

Die Steuereinrichtung arbeitet wie folgt:

Die Pumpe 13 fördert Druckmittel über den Einlaß in die Längsbohrung 11, wobei dieses auch in das Innere des Steuerschiebers gelangt. Ein Teil dieses Druckmittels fließt über die Blende 24, die Drosselbohrung 25 und die Drosselscheibe 32 in den Raum 18. Über die Drosselbohrung 25 fließt ein Steuerölstrom zur Querbohrung 46, von dieser in die Ringnut 47 und in die Querbohrung 79 des Gehäuseeinsatzes 49 und dann in die Ringnuten 78, 77 und die Querbohrung 76 in den Raum 80. Von dort fließt das Druckmittel über die Schrägbohrung 81 und die Leitung 96 zum Behälter 14 ab.

Infolge des Durchflußwiderstands an der Blende 25 und der dabei erzeugten Druckdifferenz wird der Steuerschieber 15 entgegen der Kraft der Reglerfeder 17 nach rechts verschoben und stellt über die Dreieckkerben 21 Verbindung zur Ringnut 26 und zur Leitung 30 und damit zum Behälter bzw. anderen Verbrauchern her.

Wenn das Bremspedal 72 betätigt wird, baut sich in der Leitung 70 und in den Bohrungen 69 und 65 Druck auf, und der Kolben 66 wird entgegen dem Kolben 59 nach links verschoben. Das Federwiderlager 58 drückt über den Kolben 155 auf den Kolben 52, wodurch dieser nach links verschoben wird samt dem Schieber 51. Dadurch wird die Querbohrung 86 verschlossen, so daß die Verbindung von der Bohrung 40 zum Raum 80 unterbrochen ist. Danach unterbricht der Schieber 51 auch die Verbindung vom Kanal 43 zum Raum 80, so daß kein Steueröl mehr zum Behälter 14 abfließen kann. Dadurch wird die Druckdifferenz an der Blende 25 abgebaut,und die Feder 17 bewegt den Steuerschieber 15 nach links, wodurch die Querbohrungen 44 mit der Ringnut 27 in Verbindung kommen. Nun wird aufgrund des Druckabfalls an der Blende 24 ein Teil des von der Pumpe 13 geförderten Druckmittels in den Kanal 35 und über das sich öffnende Rückschlagventil 38 in den Kanal 39 geleitet, weiterhin von dort in die Längsbohrung 40 sowie in die Leitung 88 und zum Bremszylinder 89. Ist der durch die Pedalkraft eingegebene Druck erreicht, wird der Kolben 52 nach rechts verschoben, wobei er den Schieber 51 mitnimmt. Die Ringnut 77 stellt wieder Verbindung über die Leitung 96 zum Behälter 14 her, wodurch der Druck im Kanal 43 fällt. Dadurch wird der Steuerschieber 15 des Stromregelventils entgegen der Kraft der Reglerfeder 17 nach rechts verschoben, wodurch das von der Pumpe 13 geförderte Druckmittel über die Dreieckkerben 21, die mit diesen verbundene Ringnut 26 und die Leitung 30 zum Behälter bzw. weiteren Verbrauchern abströmt.

Die Feder 57 sorgt für eine Entkopplung zwischen dem Ansteuerkreis, d. h. dem Bremspedal 72, dem Druckgeber (Kolben 66) einerseits und der Vorsteuerung des Bremsventils andererseits, welche insbesondere aus dem Schieber 51 und dem Kolben 52 besteht. Wenn der vorgewählte Bremsdruck erreicht ist, wird der Kolben 52 nach rechts geschoben. Der Kolben 52 muß bei bekannten Steuereinrichtung die Druckfedern 61, 62, den Kolben 66 und sogar den Fuß des Fahrers verstellen (die Druckfedern 61, 62 haben die Aufgabe, den Bremsdruck zu begrenzen). Da alle Teile Reibung haben, beschleunigt werden müssen und der Fuß des Fahrers gewissermaßen auch eine Feder darstellt, steigt der Druck im Bremskreis bei diesem Vorgang sehr hoch. Die Folge sind nur wenige Druckstufen beim Druckaufbau und kein feinfühliges Bremsen. Durch die Entkopplung von Federwiderlager 58 und Kolben 55, wie oben beschrieben, ist die Anzahl der Druckstufen abhängig von der Federrate der Feder 57 und dem Federweg. Auf diese Weise erhält man eine größere Anzahl von Druckstufen und dadurch ein ruckfreieres Bremsen. Anstelle der Druckfeder 57 kann bei entsprechend abgewandelter Konstruktion auch eine oder mehrere Tellerfedern verwendet werden.

## Patentansprüche

1. Hydraulische Steuereinrichtung, die das von einer Druckmittelquelle (14) geförderte Druckmittel über ein Stromregelventil (16) einem Verbraucher oder einem Behälter und über eine hydraulisch ansteuerbare Bremseinrichtung bei deren Aktivierung einem Bremszylinder (89) zuführt, wobei ein vom Stromregelventil (16) abgezweigter Steuerölstrom unterbrochen wird und in der Bremseinrichtung ein Bremsdruck erzeugt wird, wobei die Bremseinrichtung einen mit einem Schieber (51) verbundenen Kolben (52) aufweist, der von einem ebenfalls als Kolben (58) ausgebildeten Federwiderlager betätigbar ist, das in einem Hohlkolben (59) untergebracht ist und auf das mindestens eine in diesem angeordnete Druckfeder (61, 62) einwirkt, dadurch gekennzeichnet, daß in dem als Kolben (58) ausgebildeten Federwiderlager eine ein Kölbchen (155) aufnehmende Bohrung (56) ausgebildet ist, an dem der mit dem Schieber (51) verbundene Kolben (52) anliegt und daß auf das Kölbchen (55) entgegen der auf dieses vom Kolben (52) ausgeübten Kraft eine in der Bohrung (56) angeordnete Druckfeder (57) einwirkt.

## Claims

1. Hydraulic control device which supplies the hydraulic fluid pumped from a hydraulic fluid source (14) via a flow control valve (16) to a consumption unit or a container and via a hydraulically controllable brake device to a brake cylinder (89), when the hydraulically controllable brake device is activated, in which a control oil flow branched off from the flow control valve (16) is interrupted and a brake pressure is generated in the brake device, the brake device having a piston (52) connected to a spool (51), which piston (52) can be operated by a spring abutment also designed as a piston (58), which abutment is accommodated in a hollow piston (59) and has acting on it at least one compression spring (61, 62) located within the said hollow piston, characterised in that a hole (56) accepting a small piston (155) is formed in the abutment designed as a piston (58), with which small piston (155) the piston (52) connected to the spool (51) is in contact and in that a compression spring (57) located in the hole (56) acts on the small piston (55) (sic) against the force exerted on the latter by the piston (52).

## Revendications

1. Dispositif de commande hydraulique qui transmet un fluide sous pression d'une source de fluide sous pression (14), par un distributeur de régulation de débit (16) à un utilisateur ou à un réservoir et par une installation de freinage commandée hydrauliquement, à sa mise en oeuvre, à un cylindre de frein (89), avec coupure d'une veine de fluide de commande dérivée du distributeur de régulation de débit (16) et établissement d'une pression de frein créée dans l'installation de frein, l'installation de frein ayant un piston (52) relié à un tiroir (51), le piston pouvant être également actionné par un appui de ressort réalisé comme piston (58) et qui, logé dans un piston creux (59), est soumis à au moins un ressort de compression (61, 62) logé dans celui-ci, dispositif de commande, caractérisé en ce que l'appui de ressort réalisé sous forme de piston (58) comporte un perçage (56) recevant un petit piston (155) contre lequel s'appuie le piston (52) relié au tiroir (51) et la force du ressort de compression (57) logé dans le perçage (56) s'exerce sur le petit piston (55) en s'opposant à la force exercée sur celui-ci par le piston (52).

4

EP 0 356 669 B1